# EUROPÄISCHE PATENTSCHRIFT

(11) **EP 1 800 970 B1**
(45) Veröffentlichungstag und Bekanntmachung des Hinweises auf die Patenterteilung: **15.04.2009**
(21) Anmeldenummer: 06025112.1
(22) Anmeldetag: 05.12.2006
(51) Int. Cl.: B60R 21/203

(54) **Gassackmodul**
Airbag module
Module de sac de sécurité gonflable

(30) Priorität: 21.12.2005 DE 202005019960 U
(43) Veröffentlichungstag der Anmeldung: 27.06.2007
(73) Patentinhaber: TRW Automotive Safety Systems GmbH, 63743 Aschaffenburg (DE)
(72) Erfinder: Schütz, Dominik, 63857 Waldaschaff (DE)
(74) Vertreter: Prinz & Partner

(56) Entgegenhaltungen:
- EP-A1- 1 403 149
- EP-A2- 1 167 132
- DE-U1- 20 006 595
- DE-U1-8202005 020 07

## Beschreibung

Die Erfindung betrifft ein Gassackmodul.

Befestigungen, die wenigstens ein erstes Rastelement aufweisen, welches zum Eingriff in ein zweites Rastelement zur Befestigung des Gassackmoduls an einem fahrzeugfesten Bauteil ausgebildet ist, werden häufig zur Fixierung des Gassackmoduls in der Nabe eines Lenkrads eingesetzt, da sich so der eigentliche Montagevorgang auf das Einschieben des Gassackmoduls in das Lenkrad reduzieren läßt und insbesondere keine Schraubverbindungen mehr geschlossen werden müssen.

In der DE 200 06 595 U1 wird ein Gassackmodul an einer Lenkradnabe befestigt, indem separate Halteteile, die jeweils einen Rasthaken aufweisen, in dafür vorgesehene Aussparungen der Lenkradnabenwand eingesetzt wird und das Gassackmodul dann in die Lenkradnabe eingeschoben werden. Dabei verrasten die Rastarme in am Gassackmodul vorgesehenen Aussparungen, so daß das Gassackmodul an der Lenkradnabe befestigt ist. Die Halteteile weisen jeweils noch einen weiteren Federarm auf, auf dem das Gassackmodul im montierten Zustand aufliegt und das eine Rückstellkraft bei der Betätigung der Hupe durch Hinunterdrücken des Gassackmoduls liefert.

Jedoch ist es zeitaufwendig, das korrekte Schließen einer solchen Rastverbindung zu überprüfen, da die Rastelemente an der Unterseite des Gassackmoduls angeordnet sind und somit optisch nicht kontrolliert werden können.

Aufgabe der Erfindung ist es daher, eine einfache und wirksame Kontrollmöglichkeit zu schaffen, mit der das korrekte Verriegeln einer Rastverbindung zur Befestigung eines Gassackmoduls sichergestellt ist.

Dies wird mit den Merkmalen des Anspruchs 1 erreicht.

Da das Hilfsverriegelungselement erst dann in die Riegelstruktur eingreifen kann, wenn die lasttragende Rastverbindung zwischen erstem Rastelement und zweitem Rastelement korrekt geschlossen ist, kann anhand der nicht geschlossenen Hilfsverbindung zwischen Hilfsverriegelungselement und Riegelstruktur, die z.B. an einer optisch einsehbaren Stelle angeordnet sein kann oder eine mechanische Bewegung des Gassackmoduls verhindern kann, auf eine nicht korrekte Verriegelung des Gassackmoduls im Fahrzeug geschlossen werden.

In einer möglichen Ausführungsform der Erfindung ist das Kontrollelement durch einen Abschnitt des zweiten Rastelements gebildet.

Das zweite Rastelement ist z.B. ein Federdraht.

Das Hilfsverriegelungselement kann beispielsweise durch eine elastisch auslenkbare Zunge an einem Modulgehäuse oder einem Generatorträger des Gassackmoduls gebildet sein.

Bevorzugt ist die Riegelstruktur am fahrzeugfesten Bauteil ausgebildet, was zum einen eine spielarme Verriegelung des Gassackmoduls erlaubt und zum anderen die Fertigungskosten senkt, da keine weiteren Bauteile vorgesehen werden müssen.

Die Riegelstruktur weist beispielsweise einen Absatz auf, an dem das Hilfsverriegelungselement zur Anlage kommt.

Die Hilfsverbindung zwischen Hilfsverriegelungselement und Riegelstruktur muß keine großen Lasten aufnehmen, so daß diese Verbindung keine besonderen Anforderungen an ihre Stabilität zu erfüllen braucht. Da das Gassackmodul mit möglichst geringem Spiel im Fahrzeug aufgenommen ist, ist eine einfache Struktur wie etwa ein Absatz ausreichend.

Vorzugsweise ist das Hilfsverriegelungselement vor Eingriff in die Riegelstruktur in einer Verriegelungsrichtung vorgespannt. Sobald also das Hilfsverriegelungselement vom Kontrollelement freigegeben wird, kann es sich selbsttätig in eine Verriegelungsposition bringen, in der der Eingriff mit der Riegelstruktur möglich ist.

Das Gassackmodul läßt sich so ausbilden, daß es in einem korrekt verriegelten Zustand der Rastverbindung zwischen dem ersten und dem zweiten Rastelement gegen eine Rückstellkraft in einer Einsetzrichtung bewegbar ist und in einem nicht korrekt verriegelten Zustand der Rastverbindung zwischen dem ersten und dem zweiten Rastelement, in dem das Hilfsverriegelungselement nicht in Eingriff mit der Riegelstruktur ist, durch die Rückstellkraft so beaufschlagt wird, daß es in Einsetzrichtung eine andere Position einnimmt als im korrekt verriegelten Zustand.

Die Hilfsverbindung zwischen Hilfsverriegelungselement und Riegelstruktur sorgt beispielsweise auch für eine exakte Positionierung des Gassackmoduls in z-Richtung. Diese Ausbildung bietet sich vor allem bei sogenannten Floating-Horn-Modulen an, bei denen das gesamte Gassackmodul zur Betätigung einer Hupe gegen eine Rückstellfeder in das Lenkrad hineingedrückt wird. Die Rückstellfeder bewegt das Gassackmodul wieder in seine Ausgangsposition, sobald es der Fahrer losläßt.

Diese Rückstellkraft kann erfindungsgemäß ausgenutzt werden, um das Gassackmodul über seine korrekt verriegelte Lage hinaus aus dem Lenkrad hinauszuschieben, wenn die das Gassackmodul im Fahrzeug fixierende Rastverbindung zwischen dem ersten und dem zweiten Rastelement und die Hilfsverbindung zwischen dem Hilfsverriegelungselement und der Riegelstruktur nicht korrekt geschlossen sind. Bevorzugt kann aber die Hilfsverbindung zwischen Hilfsverriegelungselement und Riegelstruktur nur zustande kommen, wenn auch die Rastverbindung zwischen dem ersten und dem zweiten Rastelement, die das Gassackmodul lasttragend mit dem fahrzeugfesten Bauteil verbindet, korrekt geschlossen ist.

Befindet sich das Gassackmodul im nicht korrekt verriegelten Zustand, ist es möglich, die Rückstellkraft auszunutzen und die Rückstellfeder das Gassackmodul ein weiteres Stück aus dem Lenkrad hinaus schieben zu lassen, so daß sofort erkennbar ist, daß sich das Gassackmodul nicht in einem korrekt verriegelten Zustand befindet.

Vorzugsweise sind das erste Rastelement und das Hilfsverriegelungselement räumlich voneinander entfernt angeordnet. Zum Beispiel läßt sich das erste Rastelement wie bekannt unter dem Boden des Modulgehäuses befestigen, während das Hilfsverriegelungselement seitlich, z.B. an einer Führung des Gassackmoduls im Lenkrad, angeordnet sein kann.

Zu einer Entriegelung läßt sich vorzugsweise das Hilfsverriegelungselement durch das Kontrollelement in seinen nicht verriegelten Zustand überführen. Hierbei ist z.B. die Verriegelungsbewegung umkehrbar.

Vorzugsweise ist es nicht ohne Entriegelung der Hilfsverriegelung zwischen dem Hilfsverriegelungselement und der Riegelstruktur möglich, die Verbindung zwischen erstem und zweitem Rastelement zu lösen und das Gassackmodul aus dem fahrzeugfesten Bauteil zu entnehmen.

Vorzugsweise werden bei einer Entriegelung durch eine Bewegung des Kontrollelements gleichzeitig das Hilfsverriegelungselement von der Riegelstruktur und das erste Rastelement vom zweiten Rastelement gelöst, so daß eine Demontage schnell und einfach bewerkstelligt werden kann.

Weitere Merkmale und Vorteile der Erfindung ergeben sich aus der nachfolgenden Beschreibung eines Ausführungsbeispiels in Verbindung mit den beigefügten Zeichnungen. In diesen zeigen:
- Figur 1 eine schematische Schnittansicht eines erfindungsgemäßen Gassackmoduls in einem korrekt verriegelten Zustand; und
- Figuren 2a bis 2c den Verriegelungs- bzw. Entriegelungsprozeß bei der Befestigung/Entnahme des erfindungsgemäßen Gassackmoduls.

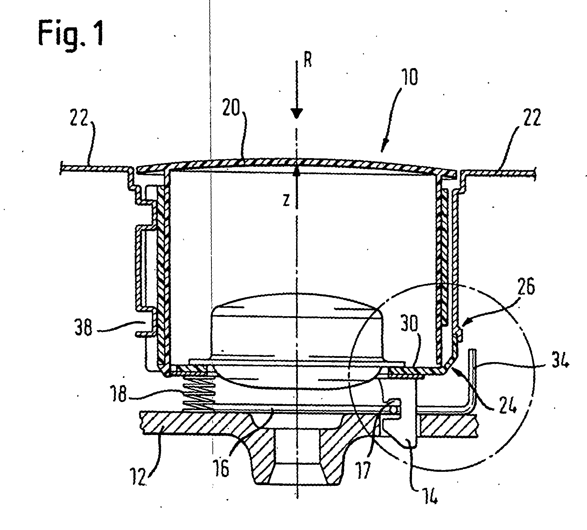

In Figur 1 ist ein Gassackmodul 10 gezeigt, das über eine Rastverbindung an einem fahrzeugfesten Bauteil 12, hier der Nabe eines Lenkrads, befestigt ist. Das Gassackmodul 10 weist ein Gehäuse mit einer Abdeckkappe 20, an die Abdeckkappe 20 anschließenden Seitenwänden sowie einem Boden, der hier durch einen Generatorträger 30 gebildet ist, auf. Ein Gasgenerator und ein nicht gezeigter Gassack sind auf bekannte Weise im Gassackmodul 10 aufgenommen.

Die Rastverbindung besteht aus einem oder mehreren ersten Rastelementen 14 (hier ist nur ein an der Unterseite des Gassackmoduls 10 angebrachter Rasthaken gezeigt), das/die in ein zweites Rastelement 16 eingreifen, das hier eine aus einem Federdraht gebogene Rastfeder ist. Statt eines Federdrahts könnte natürlich auch ein anderes mehr oder minder starres, eventuell elastisch beaufschlagtes Rastmittel vorgesehen sein. Selbstverständlich könnte z.B. auch umgekehrt das erste Rastelement 14 als Federdraht und das zweite Rastelement 16 als Rasthaken oder -bolzen oder ähnliches ausgebildet sein.

Im gezeigten korrekt verriegelten Zustand ist das erste Rastelement 14 in Eingriff mit dem zweiten Rastelement 16, wobei das Gassackmodul 10 lasttragend gegen Entnahme aus dem fahrzeugfesten Bauteil 12 in z-Richtung gesichert ist, jedoch ein gewisses Spiel in z-Richtung besteht. Konkret liegt im gezeigten Beispiel ein Abschnitt des zweiten Rastelements 16 in einer Aussparung 17 des ersten Rastelements 14

Das Spiel in z-Richtung ist beabsichtigt, um das Gassackmodul 10 nach dem Floating-Horn-Prinzip in das Lenkrad hineindrücken zu können, um (nicht dargestellte) Hupkontakte zu schließen. Hierzu wird das Gassackmodul 10 gegen die Rückstellkraft einer Rückstellfeder 18 bewegt.

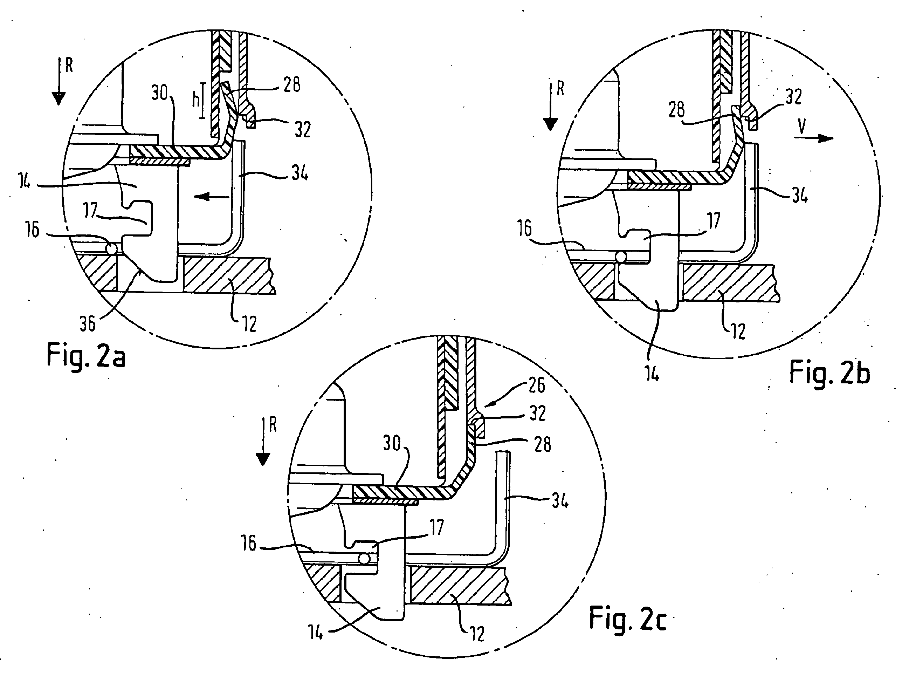

Eine Kontrolle der Rastverbindung 14, 16 ist schwierig. Es muß verhindert werden, daß das Gassackmodul 10 in einer Position verharrt, in der die Rastelemente 14, 16 zwar bereits miteinander in Kontakt sind, das zweite Rastelement 16 aber ausgelenkt bleibt und noch nicht korrekt in die Aussparung 17 im ersten Rastelement 14 eingegriffen hat (Fig. 2a). Im folgenden wird hier auch von "nicht korrekt verriegeltem Zustand" gesprochen. Die Rastelemente 14, 16 sind jedoch vom Fahrzeuginnenraum in der Regel weder sichtbar noch ertastbar.

Bei dem hier gezeigten Gassackmodul 10 ist vorgesehen, daß die Rückstellfeder 18 einen so großen z-Hub bewirkt, das bei nicht korrekt geschlossener Rastverbindung 14, 16 das Gassackmodul 10 ein Stück h aus dem fahrzeugfesten Bauteil 12, also z.B. dem Lenkrad, herausstehen würde.

Im korrekt verriegelten Zustand schließt hingegen die Abdeckkappe 20 des Gassackmoduls 10 flächig mit einer Außenseite einer Fahrzeug-, insbesondere Lenkradverkleidung 22 ab.

Diese Konfiguration ist jedoch nur zu erreichen, wenn ein Hilfsverriegelungselement 24 in Eingriff mit einer Riegelstruktur 26 ist. Solange diese Hilfsverbindung nicht geschlossen ist, befindet sich das Gassackmodul in einem nicht korrekt verriegelten Zustand. Das Zustandekommen der Hilfsverriegelung 24, 26 ist näher in den Figuren 2a bis 2c gezeigt. Das Hilfsverriegelungselement 24 ist in diesem Fall eine elastisch auslenkbare Zunge 28 am Generatorträger 30, während die Riegelstruktur 26 durch einen Absatz 32 an einem in etwa parallel zu einer Seitenwand des Gassackmoduls 10 verlaufenden Abschnitt der Fahrzeugverkleidung 22 ausgebildet ist.

Ein Kontrollelement 34, das hier als nach oben gebogener Abschnitt des das zweite Rastelement 16 bildenden Federdrahts realisiert ist, gewährleistet, daß das Hilfsverriegelungselement 24 nur dann in Eingriff mit der Riegelstruktur 26 kommen kann, wenn das zweite Rastelement 16 korrekt in das erste Rastelement 14 eingegriffen hat. Natürlich muß das Kontrollelement 34 nicht einstückig mit dem zweiten Rastelement 16 ausgebildet sein, es kann sich auch um ein mit diesem ent- oder gekoppeltes, separates Bauteil handeln. Das Kontrollelement 34 wird zusammen mit dem bzw. durch das zweite Rastelement 16 verschoben.

Beim Schließen der Rastverbindung zwischen dem ersten und dem zweiten Rastelement 14, 16 wird das zweite Rastelement 16 zunächst von einer Anlaufschräge 36 am unteren Ende des ersten Rastelements 14 zur Seite, in den hier gezeigten Figuren nach links, gedrückt. Bei der Seitwärtsbewegung bewegt sich auch das Kontrollelement 34 nach links (Pfeil in Figur 2a). Die Dimensionen von Kontrollelement 34 und Hilfsverriegelungselement 24 sind so bemessen, daß im nun vorliegenden, nicht korrekt verriegelten Zustand, in dem das zweite Rastelement 16 zwar in Kontakt mit dem ersten Rastelement 14 ist, aber noch nicht in die Aussparung 17 des ersten Rastelements 14 eingegriffen hat, das Kontrollelement 34 so in Anlage an das Hilfsverriegelungselement 24 ist, daß dieses beabstandet von der Riegelstruktur 26 gehalten wird. Die Hilfsverbindung zwischen Hilfsverriegelungselement 24 und Riegelstruktur 26 kann also nicht geschlossen werden. Infolgedessen ist aber die Bewegung in z-Richtung des Gassackmoduls 10 nicht stark genug eingeschränkt, so daß die Rückstellfeder 18 das Gassackmodul 10 über die Oberfläche der Fahrzeugverkleidung 22 hinausdrücken kann. Es ist somit sofort zu erkennen, daß sich die Rastverbindung zwischen dem ersten und dem zweiten Rastelement 14, 16 nicht im korrekt verriegelten Zustand befindet.

Bewegt sich nun aber das Gassackmodul 10 in Einschubrichtung R weiter gegen die Rückstellkraft der Rückstellfeder 18, so passiert, wie in den Figuren 2b und 2c gezeigt, der Rasthaken die Rastfeder, so daß das zweite Rastelement 16 in Eingriff mit der Aussparung 17 im ersten Rastelement 14 gelangt. Das Hilfsverriegelungselement 24, also hier die elastisch auslenkbare Zunge 28, ist in eine Verriegelungsrichtung V (hier nach rechts gerichtet) vorgespannt. Das Kontrollelement 34 bewegt sich entsprechend der Bewegung des zweiten Rastelements 16 ebenfalls nach rechts, so daß sich nach und nach das Hilfsverriegelungselement 24 in Verriegelungsrichtung V bewegt (Figur 2b). Ein Überdrücken in Einschubrichtung R sorgt schließlich dafür, daß das Hilfsverriegelungselement 24 in die richtige Position gelangt, um in die Riegelstruktur 26 einzugreifen. In diesem Fall kommt also die Zunge 28 zur Anlage an den Absatz 32 im seitlichen Abschnitt der Fahrzeugverkleidung 22. Unter "Überdrücken" ist zu verstehen, daß das Gassackmodul 10 weiter in Einschubrichtung R bewegt wird, als es für den Eingriff des zweiten Rastelements 16 in das erste Rastelement 14 notwendig wäre. Die korrekt verriegelte Stellung des Gassackmoduls 10 ist in Figur 2c gezeigt.

Ein Schließen der Hilfsverbindung 24, 26, ist erst dann möglich, wenn das erste Rastelement 14 in korrektem Eingriff mit dem zweiten Rastelement 16 ist.

Es können über den Umfang des Gassackmoduls 10 verteilt mehrere Hilfsverbindungen 24, 26 vorgesehen sein, die sich z.B. mit den auf der linken Seite der Figur 1 gezeigten Führungen 38 abwechseln.

Die Hilfsverbindung 24, 26 ermöglicht nicht nur eine Kontrolle über eine korrekte Verriegelung der Rastverbindung 14, 16, sondern kann zusätzlich dazu oder separat davon eingesetzt werden, um die z-Höhe des Gassackmoduls 10 auf einfache Weise exakt zu justieren. Vor allem ist die Justierung unabhängig von der exakten z-Position der Rastverbindung 14, 16. Die Hilfsverbindung 24, 26, insbesondere zusammen mit der Führung 38, erlaubt auch eine sehr genaue Positionierung des Gassackmoduls 10 bezüglich der Fahrzeugverkleidung 22 in allen Raumrichtungen.

In allen Fällen muß die Hilfsverbindung 24, 26 nur die geringen Kräfte des täglichen Fahrzeugbetriebs aufnehmen. Zu diesem Zweck ist aber z.B. die dargestellte Form der Hilfsverbindung 24, 26 völlig ausreichend. Wie in Figur 2c gezeigt, muß im normalen Fahrbetrieb kein Kontakt zwischen dem zweiten Rastelement 16 und dem ersten Rastelement 14 bestehen. Im gezeigten Fall liegt der die eigentliche Verriegelung bildende Abschnitt des zweiten Rastelements 16 nach allen Seiten ohne Berührung innerhalb der Aussparung 17 im ersten Rastelement 14. Auf diese Weise kann ein unerwünschtes Klappern verhindert werden. Kommt es bei einem Unfall zu einer Auslösung des Gassackmoduls 10, wird bei der Entfaltung des Gassacks das Gassackmodul 10 so weit in z-Richtung nach oben gezogen, daß die Last praktisch vollständig von der Rastverbindung 14, 16 übernommen wird.

Das Hilfsverriegelungselement 24 und die Riegelstruktur 26 könnten auch näher zum oberen Ende des Gassackmoduls 10 gelegt werden und eventuell eine optische Anzeige darstellen, die auf eine nicht korrekt verriegelte Rastverbindung 14, 16 hindeutet.

Soll das Gassackmodul 10 vom fahrzeugfesten Bauteil 12 getrennt werden, so wird zur Entriegelung das zweite Rastelement 16 entgegen der Verriegelungsrichtung V nach links (in den Figuren) bewegt. Im Prinzip wird die in den Figuren 2a bis 2c gezeigte Sequenz in umgekehrter Reihenfolge durchlaufen. Das Kontrollelement 34 kommt in Anlage an das Hilfsverriegelungselement 24 und drückt dieses außer Eingriff mit der Riegelstruktur 26. Gleichzeitig bewegt sich das zweite Rastelement 16 außer Eingriff mit dem ersten Rastelement 14. Die Rückstellfeder 18 drückt das Gassackmodul 10 so weit nach oben, daß es über die Oberfläche der Fahrzeugverkleidung 22 hervorsteht und entnommen werden kann.

Das vorgestellte Gassackmodul könnte auch auf einer Beifahrerseite, in einer Rückenlehne eines Fahrzeugsitzes oder an anderer geeigneter Stelle in einem Fahrzeug angeordnet sein.

## Patentansprüche

1. Gassackmodul
mit wenigstens einem ersten Rastelement (14), das zum Eingriff in ein zweites Rastelement (16) zur Bildung einer Rastverbindung zur Befestigung des Gassackmoduls (10) an einem fahrzeugfesten Bauteil (12) ausgebildet ist,
**dadurch gekennzeichnet, daß** wenigstens ein Hilfsverriegelungselement (24) vorgesehen ist, das für einen Eingriff mit einer Riegelstruktur (26) ausgelegt ist,
und ein Kontrollelement (34), das einen Eingriff des Hilfsverriegelungselements (24) in die Riegelstruktur (26) verhindert, solange das erste Rastelement (14) nicht in Eingriff mit dem zweiten Rastelement (16) ist.

2. Gassackmodul nach Anspruch 1, **dadurch gekennzeichnet, daß** das Kontrollelement (34) durch einen Abschnitt des zweiten Rastelements (16) gebildet ist.

3. Gassackmodul nach einem der vorhergehenden Ansprüche, **dadurch gekennzeichnet, daß** das zweite Rastelement (16) ein Federdraht ist.

4. Gassackmodul nach einem der vorhergehenden Ansprüche, **dadurch gekennzeichnet, daß** das Hilfsverriegelungselement (24) durch eine elastisch auslenkbare Zunge (28) an einem Modulgehäuse oder einem Generatorträger (30) des Gassackmoduls (10) gebildet ist.

5. Gassackmodul nach einem der vorhergehenden Ansprüche, **dadurch gekennzeichnet, daß** die Riegelstruktur (26) am fahrzeugfesten Bauteil (12) oder an einer Fahrzeugverkleidung (22) ausgebildet ist.

6. Gassackmodul nach einem der vorhergehenden Ansprüche, **dadurch gekennzeichnet, daß** die Riegelstruktur (26) einen Absatz (32) aufweist, an dem das Hilfsverriegelungselement (24) zur Anlage kommt.

7. Gassackmodul nach einem der vorhergehenden Ansprüche, **dadurch gekennzeichnet, daß** das Hilfsverriegelungselement (24) vor Eingriff in die Riegelstruktur (26) in eine Verriegelungsrichtung (V) vorgespannt ist.

8. Gassackmodul nach einem der vorhergehenden Ansprüche, **dadurch gekennzeichnet, daß** in einem korrekt verriegelten Zustand das Gassackmodul (10) gegen eine Rückstellkraft in einer Einsetzrichtung (R) bewegbar ist und das Gassackmodul (10) in einem nicht korrekt verriegelten Zustand, in dem das Hilfsverriegelungselement (24) nicht in Eingriff mit der Riegelstruktur (26) ist, durch die Rückstellkraft so beaufschlagt wird, daß es in Einsetzrichtung (R) eine andere Position einnimmt als im korrekt verriegelten Zustand.

9. Gassackmodul nach einem der vorhergehenden Ansprüche, **dadurch gekennzeichnet, daß** das erste Rastelement (14) und das Hilfsverriegelungselement (24) räumlich voneinander entfernt angeordnet sind.

10. Gassackmodul nach einem der vorhergehenden Ansprüche, **dadurch gekennzeichnet, daß** zu einer Entriegelung das Hilfsverriegelungselement (24) durch das Kontrollelement (34) in seinen nicht verriegelten Zustand überführt wird.

11. Gassackmodul nach einem der vorhergehenden Ansprüche, **dadurch gekennzeichnet, daß** bei einer Entriegelung der Rastverbindung durch eine Bewegung des Kontrollelements (34) gleichzeitig das Hilfsverriegelungselement (24) von der Riegelstruktur (26) und das erste Rastelement (14) vom zweiten Rastelement (16) gelöst werden.

## Claims

1. A gas bag module
having at least one first detent element (14) configured for engagement into a second detent element (16) to form a detent connection to fasten the gas bag module (10) to a vehicle-fixed component (12),
**characterized in that** at least one auxiliary locking element (24) is provided which is designed for engagement with a lock structure (26),
and a control element (34) preventing an engagement of the auxiliary locking element (24) into the lock structure (26) as long as the first detent element (14) is not in engagement with the second detent element (16).

2. The gas bag module according to claim 1, **characterized in that** the control element (34) is formed by a section of the second detent element (16).

3. The gas bag module according to any of the preceding claims, **characterized in that** the second detent element (16) is a spring wire.

4. The gas bag module according to any of the preceding claims, **characterized in that** the auxiliary locking element (24) is formed by an elastically deflectable tongue (28) on a module housing or on a generator carrier (30) of the gas bag module (10).

5. The gas bag module according to any of the preceding claims, **characterized in that** the lock structure (26) is formed on the vehicle-fixed component (12) or on a vehicle lining (22).

6. The gas bag module according to any of the preceding claims, **characterized in that** the lock structure (26) has a shoulder (32) against which the auxiliary locking element (24) comes into abutment.

7. The gas bag module according to any of the preceding claims, **characterized in that** the auxiliary locking element (24) is pre-stressed in a locking direction (V) before engagement into the lock structure (26).

8. The gas bag module according to any of the preceding claims, **characterized in that** in a correctly locked state, the gas bag module (10) is movable in an insertion direction (R) against a restoring force, and **in that** in a not correctly locked state in which the auxiliary locking element (24) is not in engagement with the lock structure (26), the gas bag module (10) is acted upon by the restoring force such that it assumes a position in the insertion direction (R) which is different from that in the correctly locked state.

9. The gas bag module according to any of the preceding claims, **characterized in that** the first detent element (14) and the auxiliary locking element (24) are arranged spatially apart from each other.

10. The gas bag module according to any of the preceding claims, **characterized in that** for unlocking, the auxiliary locking element (24) is transferred into its non-locked state by the control element (34).

11. The gas bag module according to any of the preceding claims, **characterized in that** in case of an unlocking of the detent connection by a movement of the control element (34), the auxiliary locking element (24) is released from the lock structure (26) and the first detent element (14) is simultaneously released from the second detent element (16).

## Revendications

1. Module de coussin à gaz
comportant au moins un premier élément d'enclenchement (14) qui est réalisé pour s'engager dans un deuxième élément d'enclenchement (16) afin de former une liaison par enclenchement pour fixer le module de coussin à gaz (10) sur un composant (12) solidaire du véhicule,
**caractérisé en ce qu'**il est prévu au moins un élément de verrouillage auxiliaire (24) qui est conçu pour un engagement avec une structure de verrou (26),
et un élément de contrôle (34) qui empêche un engagement de l'élément de verrouillage auxiliaire (24) dans la structure de verrou (26) tant que le premier élément d'enclenchement (14) n'est pas en engagement avec le deuxième élément d'enclenchement (16).

2. Module de coussin à gaz selon la revendication 1, **caractérisé en ce que** l'élément de contrôle (34) est formé par un tronçon du deuxième élément d'enclenchement (16).

3. Module de coussin à gaz selon l'une des revendications précédentes, **caractérisé en ce que** le deuxième élément d'enclenchement (16) est un ressort en fil métallique.

4. Module de coussin à gaz selon l'une des revendications précédentes, **caractérisé en ce que** l'élément de verrouillage auxiliaire (24) est formé par une languette (28), qui peut dévier élastiquement, sur un boîtier de module ou sur un support de générateur (30) du module de coussin à gaz (10).

5. Module de coussin à gaz selon l'une des revendications précédentes, **caractérisé en ce que** la structure de verrou (26) est réalisée sur le composant (12) solidaire du véhicule ou sur un revêtement de véhicule (22).

6. Module de coussin à gaz selon l'une des revendications précédentes, **caractérisé en ce que** la structure de verrou (26) présente un talon (32) sur lequel l'élément de verrouillage auxiliaire (24) vient en appui.

7. Module de coussin à gaz selon l'une des revendications précédentes, **caractérisé en ce que** l'élément de verrouillage auxiliaire (24) est précontraint dans une direction de verrouillage (V) avant l'engagement dans la structure de verrou (26).

8. Module de coussin à gaz selon l'une des revendications précédentes, **caractérisé en ce que** dans un état correctement verrouillé, le module de coussin à gaz (10) peut être déplacé dans une direction de mise en place (R) à l'encontre d'une force de rappel, et dans un état non correctement verrouillé dans lequel l'élément de verrouillage auxiliaire (24) n'est pas en engagement avec la structure de verrou (26), le module de coussin à gaz (10) est sollicité par la force de rappel de telle sorte qu'en direction de mise en place (R), il occupe une autre position que dans l'état correctement verrouillé.

9. Module de coussin à gaz selon l'une des revendications précédentes, **caractérisé en ce que** le premier élément d'enclenchement (14) et l'élément de verrouillage auxiliaire (24) sont agencés éloignés l'un de l'autre dans l'espace.

10. Module de coussin à gaz selon l'une des revendications précédentes, **caractérisé en ce que** pour réaliser un déverrouillage, l'élément de verrouillage auxiliaire (24) est amené par l'élément de contrôle (34) dans son état non verrouillé.

11. Module de coussin à gaz selon l'une des revendications précédentes, **caractérisé en ce qu'**en cas de déverrouillage de la liaison par enclenchement, par un mouvement de l'élément de contrôle (34), l'élément de verrouillage auxiliaire (24) est détaché de la structure de verrou (26) et, en même temps, le premier élément d'enclenchement (14) est détaché du deuxième élément d'enclenchement (16).
